# EUROPÄISCHE PATENTSCHRIFT

(11) **EP 1 328 796 B1**
(45) Veröffentlichungstag und Bekanntmachung des Hinweises auf die Patenterteilung: **30.09.2009**
(21) Anmeldenummer: 01987878.4
(22) Anmeldetag: 14.10.2001
(51) Int. Cl.: G01N 27/22, G01N 27/12, G01K 7/16

(54) **SENSOREINHEIT MIT EINEM LUFTFEUCHTE-SENSOR UND MIT EINEM LUFTTEMPERATUR-SENSOR**
SENSOR UNIT COMPRISING AN AIR HUMIDITY SENSOR AND AN AIR TEMPERATURE SENSOR
UNITE DE DETECTION COMPORTANT UN DETECTEUR D'HUMIDITE ATMOSPHERIQUE ET UN DETECTEUR DE TEMPERATURE ATMOSPHERIQUE

(30) Priorität: 18.10.2000 DE 10051558
(43) Veröffentlichungstag der Anmeldung: 23.07.2003
(73) Patentinhaber: Sitronic Ges. für elektrotechnische Ausrüstung mbH & Co. KG, 71116 Gärtringen (DE)
(72) Erfinder: HOPPACH, Elmar, 70191 Stuttgart (DE)
(74) Vertreter: Kohler Schmid Möbus
(86) Internationale Anmeldenummer: PCT/DE2001/003892
(87) Internationale Veröffentlichungsnummer: WO 2002/033395

(56) Entgegenhaltungen:
- DE-A- 4 035 371
- DE-A- 19 750 123
- DE-A- 19 806 041
- US-A- 4 649 364
- US-A- 5 814 726

## Beschreibung

### Technisches Gebiet

Die Erfindung betrifft eine Sensoreinheit mit einem Luftfeuchte-Sensor zur Messung der relativen Luftfeuchte und einem Lufttemperatur-Sensor zur Messung der Lufttemperatur. Wird einem gasförmigen Medium, z. B. Wasserdampf, Wärme entzogen, so verdichtet es sich bei entsprechender Temperatur zu einer Flüssigkeit, z. B. zu Wasser. Diese Temperatur wird als Kondensationspunkt oder Taupunkt bezeichnet und kann aus der gemessenen relativen Luftfeuchte und der gemessenen Lufttemperatur errechnet werden. Derartige Sensoreinheiten werden in vielen Bereichen der Technik, insbesondere als Beschlagschutz verwendet.

### Stand der Technik

Eine Sensoreinheit mit einem Luftfeuchte-Sensor zur Messung der relativen Luftfeuchte und einem Lufttemperatur-Sensor zur Messung der Lufttemperatur ist beispielsweise durch die DE-PS 197 29 697 C1 bekannt geworden. Im Gegensatz zur direkten Bestimmung des Taupunkts durch Kondensation - wie mit Hilfe des Taupunktspiegels, dem die Beobachtung der Kondensation an einer hochglanzpolierten Oberfläche zugrunde liegt - ist es auch möglich, den Taupunkt ohne unmittelbare Messung zu bestimmen, indem ein hier nicht weiter ausgeführtes Rechenverfahren verwendet wird.

Zur Ausbildung des Luftfeuchte-Sensors zur Messung der relativen Luftfeuchte ist es bekannt, die Kapazität zwischen zwei elektrisch leitenden Elektroden unter Verwendung einer Polymerschicht als Dielektrikum zu messen. Die Dielektrizitätskonstante der Polymerschicht ist ein Maß für die relative Feuchte.

Die Erfassung der Lufttemperatur in der Nähe des Luftfeuchte-Sensors erfolgt durch einen Lufttemperatur-Sensor, der z.B. als temperaturabhängiger Widerstand ausgeführt werden kann.

Auf Grund der Tatsache, dass die relative Luftfeuchtigkeit bei einem bestimmten Wassergehalt unmittelbar von der Lufttemperatur abhängt, muss die Lufttemperatur am Luftfeuchte-Sensor und am Lufttemperatur-Sensor möglichst identisch sein oder die Abweichung der Temperatur muss bei der Berechnung des Taupunkts berücksichtigt werden. Durch die unterschiedliche Montagetechnik und die Bauformen bekannter Luftfeuchte-Sensoren und des bekannten Lufttemperatur-Sensors bildet sich eine Temperaturdifferenz zwischen beiden Sensoren aus, welche bei der Bestimmung des Taupunkts beachtet werden muss.

Ein integrierter Aufbau einer derartigen Sensoreinheit in Dünnschichttechnik ist in der DE 40 35 371 A1 beschrieben.

### Aufgabe der Erfindung

Der vorliegende Erfindung liegt die Aufgabe zugrunde, eine intensive thermische Kopplung mit geringem Temperaturunterschied zwischen Luftfeuchte-Sensor, Lufttemperatur-Sensor und zu analysierendem Luftgemisch herzustellen, ohne eine aufwendige Dünnschichttechnik verwenden zu müssen.

### Gegenstand und Vorteile der Erfindung

Diese Aufgabe wird durch eine Sensoreinheit mit gemeinsamer Montagebasis für die beiden Sensoren, einem Luftfeuchte-Sensor und einem Lufttemperatur-Sensor, gelöst, wobei eine thermisch leitfähige Beschichtung der Montagebasis vorgesehen ist, mit der sowohl der Luftfeuchte-Sensor als auch der Lufttemperatur-Sensor verbunden ist. Es kann beispielsweise eine herkömmliche Leiterplatte aus einem nicht leitfähigen oder einem nur gering leitfähigen Material, wie Kunststoff, verwendet werden.

Der Luftfeuchte-Sensor ist über einer Kavität oder Bohrung der Montagebasis angeordnet und deckt die Kavität oder Bohrung zumindest teilweise ab. Die Kavität oder Bohrung verbessert die Zugänglichkeit des Luftfeuchte-Sensors, weil das zu analysierende Luftgemisch über die Kavität oder Bohrung den Luftfeuchte-Sensor, d.h. eine aktive Sensorfläche, an- bzw. umströmen kann. Das Zusammenwirken zwischen Luftgemisch und Luftfeuchte-Sensor wird optimiert. Die Wärmeleitfähigk eit der Kavität oder Bohrung ist verbessert, indem die Innenflächen der Kavität oder Bohrung mit einer thermisch leitfähigen Beschichtung, vorzugsweise einer Metallisierung, versehen sind. Der Wärme- oder Temperaturausgleich zwischen Luftfeuchte-Sensor und Luftgemisch kann über eine größere zugängliche Kontaktfläche des Luftfeuchte-Sensors stattfinden. Die Temperaturdifferenz zwischen dem Luftfeuchte-Sensor und dem Trägermaterial der Sensoren (Montagebasis) kann insbesondere bei erhöhtem Gasaustausch vermindert werden, so dass auch eine Temperaturdifferenz zum Lufttemperatur-Sensor vermieden wird.

Bei einer bevorzugten Sensoreinheit ist der Luftfeuchte-Sensor als kapazitives, flächiges Bauelement, vorzugsweise in SMD-Technik, ausgebildet und über flächige Kontakte mit der thermisch leitfähigen Beschichtung der Montagebasis verbunden. Dies verbessert weiter den Austausch zwischen Montagebasis, Luftfeuchte-Sensor und Lufttemperatur-Sensor.

Eine weitere Verbesserung wird dadurch bewirkt, dass der Lufttemperatur-Sensor in unmittelbarer Nähe des Luftfeuchte-Sensors angeordnet ist. Dies trägt zur Minderung der Fehler bei der Berechnung des Taupunkts aus den Messgrößen Temperatur und relativer Luftfeuchte bei.

Wenn das Gehäuse des Sensors Luftdurchtrittsöffnungen aufweist, die der Bohrung gegenüberliegend angeordnet sind, wird die zu analysierende Luft zielgerichtet dem Luftfeuchte-Sensor zugeführt. Nach Möglichkeit kann nur ein Wärmeaustausch mit dem Luftfeuchte-Sensor und dem Lufttemperatur-Sensor stattfinden. Eine Verfälschung der Messung durch einen Kontakt der Luft mit weiteren Bauelementen des Sensors wird vermieden.

Lötverbindungen der Sensoren zu der metallischen Beschichtung oder Kaschierung der Montagebasis erhöhen zusätzlich die thermische Kopplung.

Zum Schutz der Sensoreinheit gegen Umwelteinflüsse kann eine Klimakapselung auf dem Trägermaterial hinzugefügt werden. Diese kann ein- oder beidseitig aus klimadurchlässigem Material realisiert werden. Bei nur einseitig klimadurchlässiger. Kapselung kann das zweite Schutzelement aus jedem nicht klimadurchlässsigem Material realisiert werden.

### Zeichnung

Ein Ausführungsbeispiel der erfindungsgemäßen Sensoreinheit ist in der schematischen Zeichnung dargestellt und wird in der nachfolgenden Beschreibung zur Zeichnung erläutert. Es zeigt:
- Fig. 1: eine perspektivische Ansicht der Luftströmung abgewandten Sensorseite einer Sensoreinheit nach der Lehre der Erfindung;
- Fig. 2: eine perspektivische Ansicht einer Klimakapselung der Sensoreinheit nach Fig. 1.

### Beschreibung des Ausführungsbeispiels

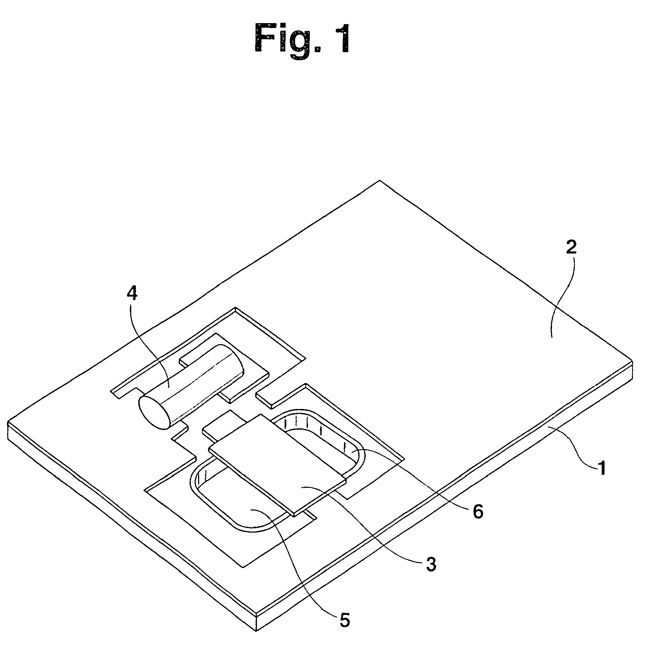

Aus der Fig. 1 ist ersichtlich, dass eine Montagebasis **1** (Leiterplatte) aus einem thermisch nicht oder gering leitfähigen Kunststoffmaterial mit einer thermisch leitfähigen Beschichtung **2** der Oberfläche versehen ist. Die Beschichtung 2 ist in der Fig. 1 nur schematisch angedeutet und hat die Funktion, dass neben der Schaltungsfunktion eine gute Wärmeübertragung zwischen den Bauteilen der Montagebasis 1 zustande kommt. Auf der Montagebasis 1 sind ein Luftfeuchte-Sensor **3** zur Messung der relativen Luftfeuchte und ein Lufttemperatur-Sensor **4** zur Messung der Lufttemperatur der zu analysierenden Luft angeordnet. Die Montagebasis 1 ist Teil einer Sensoreinheit zur Bestimmung des Taupunkts Weitere auf der Montagebasis 1 befindliche Bauelemente sind der Übersichtlichkeit halber nicht dargestellt.

Der Luftfeuchte-Sensor 3 umfasst zwei elektrisch leitende Elektroden, zwischen denen sich ein Polymer als Dielektrikum befindet. Die dielektrischen Eigenschaften des Polymers werden von der Luftfeuchte beeinflusst. Es besteht ein eindeutiger Zusammenhang zwischen der relativen Luftfeuchte und dem von dem Polymer molekular aufgenommen Wasser. Der Lufttemperatur-Sensor 4 ist durch einen temperaturabhängigen Widerstand ausgebildet. Daher ist es möglich, mit Hilfe der Kapazitätsmessung am Luftfeuchte-Sensor 3 und der Widerstandsmessung am Lufttemperatur-Sensor 4 den Taupunkt rechnerisch zu bestimmen.

Der Lufttemperatur-Sensor 4 ist auf einer der beiden Seiten der Montagebasis 1 in unmittelbarer Nähe zum Luftfeuchte-Sensor 3 so montiert, dass der Temperaturunterschied zwischen den beiden Sensoren 3 und 4 minimiert ist. Der als oberflächenmontiertes Bauelement ausgeführte Lufttemperatur-Sensor 4 wird durch eine flächige Lötung an der Montagebasis 1 bzw. an der Beschichtung 2 thermisch kontaktiert. Es ist ein flächenhafter guter Kontakt zur Beschichtung 2 hergestellt. Die Sensoren 3 und 4 stehen über die thermisch leitfähige Beschichtung 2 miteinander in thermischem Kontakt.

Der Luftfeuchte-Sensor 3 ist als oberflächenmontierbares Bauteil in SMD-Technik ("surface mounted device") ausgeführt . Wenn die aktive Seite des Luftfeuchte-Sensors 3 einer Kavität oder durchgängigen Bohrung **5** und der metallischen Beschichtung 2 der Montagebasis 1 zugewandt ist, können Durchkontaktierungen im Basismaterial des Luftfeuchte-Sensors 3 eingespart werden. Die Montagetechnik vereinfacht sich. Der Luftfeuchte-Sensor 3 ist durch die unmittelbare Verlötung der flächigen Kontakte thermisch an die Beschichtung 2 der Montagebasis 1 kontaktiert.

Zur Verminderung der Temperaturdifferenz zum umgebenden Luft- oder Gasgemisch ist der Luftfeuchte-Sensor 3 mit seiner aktiven Seite über der Kavität oder Bohrung 5 in der Montagebasis 1 angeordnet, so dass auch bei erhöhten Gaswechselgeschwindigkeiten nur ein geringer Temperaturunterschied zwischen Luftfeuchte-Sensor 3 und der Beschichtung 2 auftreten kann. Dies kann durch eine thermisch leitfähige Beschichtung **6** der Kavität 5 noch unterstützt werden, so dass weder zwischen Gasgemisch und Luftfeuchte-Sensor noch zwischen Lufttemperatur- und Luftfeuchte-Sensor ein erhöhter Temperaturunterschied vorliegt. Die Kavität oder Bohrung 5 erfüllt zum einen die Funktion, eine möglichst große Fläche, d. h. möglichst die gesamte aktive Seite, des Luftfeuchte-Sensors 3 dem Luftgemisch gleichmäßig auszusetzen. Die Kavität oder Bohrung 5 bildet zusammen mit entsprechenden Luftschlitzen im Gehäuse der Sensoreinheit eine Strömungshilfe, um das zu analysierende Luftgemisch auf den Luftfeuchte-Sensor 3 zielgerichtet hinzuleiten. Zum anderen wird über die beschichteten Kontaktflächen 6 der Kavität oder Bohrung 5 ein Wärmeaustausch des Luftgemischs mit der Montagebasis 1 erreicht. Die Flächenverhältnisse für den Wärmeaustausch zwischen Luftgemisch und Luftfeuchte-Sensor 3 bzw. Montagebasis 1 und Lufttemperatur-Sensor 4 entsprechen einander in etwa und sind so aufeinander abgestimmt, dass annähernd gleiche Wärmemengen an die Sensoren 3 und 4 übertragen werden. Der Luftfeuchte-Sensor 3 wird über die Luft an der aktiven Elektrode erwärmt oder abgekühlt und der Lufttemperatur-Sensor 4 wird über die Beschichtung 6 und die Beschichtung 2 zwischen Lufttemperatur-Sensor 4 und Luftfeuchte-Sensor 3 erwärmt oder abgekühlt.

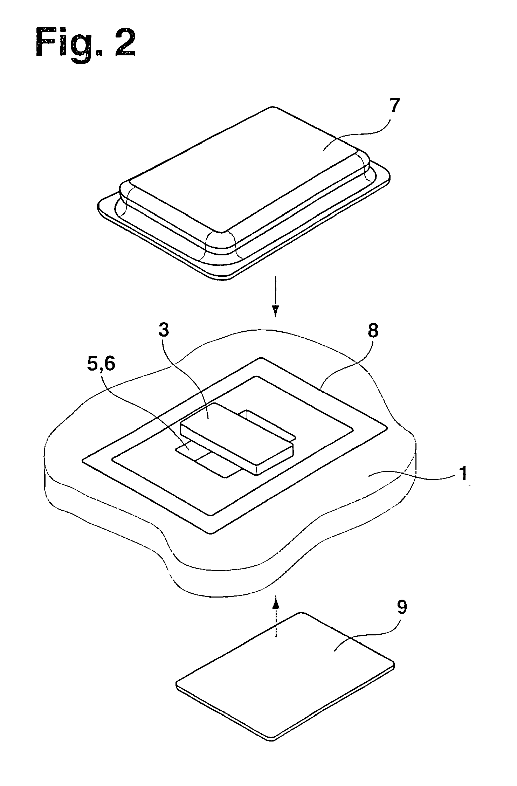

Der Luftfeuchte-Sensor 3 kann an der dem Sensor gegenüberliegenden Seite mit einer klimadurchlässigen Membran **9** abgedeckt werden. Die Klimakapselung kann auf der Sensorseite aus jedem Material ausgeführt werden. Bevorzugt wird hier ein Metalldeckel **7** in SMD-Löttechnik an einem Teilbereich **8** aufgebracht. So kann die Temperaturdifferenz weiter vermindert werden (Fig. 2).

### BEZUGSZEICHENLISTE

- 1: Montagebasis
- 2: Beschichtung
- 3: Luftfeuchte-Sensor
- 4: Lufttemperatur-Sensor
- 5: Kavität oder Bohrung
- 6: Beschichtung
- 7: Metalldeckel
- 8: Teilbereich
- 9: Membran

## Patentansprüche

1. Sensoreinheit mit einem auf einer Montagebasis (1) angeordneten Luftfeuchte-Sensor (3) und einem ebenfalls auf der Montagebasis (1) angeordneten, separaten Lufttemperatur-Sensor (4), **dadurch gekennzeichnet, dass** eine separate thermisch leitfähige Beschichtung (2) der Montagebasis (1) vorgesehen ist, mit der sowohl der Luftfeuchte-Sensor (3) als auch der Lufttemperatur-Sensor (4) zur Herstellung eines thermischen Kontakts zwischen den beiden separaten Sensoren (3, 4) verbunden ist und dass der Luftfeuchte-Sensor (3) über einer Kavität oder Bohrung (5) der Montagebasis (1) angeordnet ist und dass die Innenflächen der Kavität oder Bohrung (5) mit der thermisch leitfähigen Beschichtung (6) versehen sind.

2. SensoreinheIt nach Anspruch 1, **dadurch gekennzeichnet, dass** der Luftfeuchte-Sensor (3) als kapazitives, flächiges Bauelement ausgebildet und über flächige Kontakte mit der thermisch leitfähigen Beschichtung (2) der Montagebasis (1) verbunden ist.

3. Sensoreinheit nach Anspruch 2, **dadurch gekennzeichnet, dass** ein Gehäuse zur Aufnahme der Sensoreinheit vorgesehen ist und dass das Gehäuse Luftdurchtrittsöffnungen aufweist, die der Kavität oder Bohrung (5) gegenüberliegend angeordnet sind.

4. Sensoreinheit nach einem oder mehreren der vorhergehenden Ansprüche, **dadurch gekennzeichnet, dass** eine klimadurchlässige Kapselung (7, 8, 9) der Sensoreinheit (1) auf einer dem Luftfeuchte-Sensor (3) gegenüberliegenden Seite vorgesehen ist

## Claims

1. A sensor unit comprising: an air humidity sensor (3) being arranged on a mounting base (1) and a separate air temperature sensor (4) also being arranged on the mounting base (1), **characterized in that** a separate thermally conductive coating (2) of the mounting base (1) is provided to which both the air humidity sensor (3) and the air temperature sensor (4) are connected for establishing a thermal contact between both separate sensors (3, 4), and **in that** the air humidity sensor (3) is arranged above a cavity or bore (5) of the mounting base (1), and **in that** the interior surfaces of the cavity or bore (5) are provided with the thermally conductive coating (6).

2. The sensor unit according to claim 1, **characterized in that** the air humidity sensor (3) is configured as a flat capacitive structural element and is connected via flat contacts with the thermally conductive coating (2) of the mounting base (1).

3. The sensor unit according to claim 2, **characterized in that** a casing is provided for receiving the sensor unit, and **in that** the casing has air passage openings being arranged opposite the cavity or bore (5).

4. The sensor unit according to one or plural of the preceding claims, **characterized in that** there is provided a climate permeable enclosure (7, 8, 9) of the sensor unit (1) on a side opposite the air humidity sensor (3).

## Revendications

1. Unité de détection comportant un capteur d'hygrométrie (3) disposé sur une embase de montage (1) et un capteur de température d'air (4) distinct disposé également sur l'embase de montage (1), **caractérisée en ce qu'**un revêtement thermoconducteur distinct (2) de l'embase de montage (1) est prévu, auquel non seulement le capteur d'hygrométrie (3) mais également le capteur de température d'air (4) est relié en vue de la génération de contacts thermiques entre les deux capteurs distincts (3, 4) et **en ce que** le capteur d'hygrométrie (3) est disposé au-dessus d'une cavité ou d'un évidement (5) de l'embase de montage (1) et **en ce que** les surfaces intérieures de la cavité ou de l'évidement (5) sont munies d'un revêtement thermoconducteur (6).

2. Unité de détection selon la revendication 1, **caractérisée en ce que** le capteur d'hygrométrie (3) est réalisé sous la forme d'un composant plat capacitif et est relié au revêtement thermoconducteur (2) de l'embase de montage (1) par l'intermédiaire de contacts plats.

3. Unité de détection selon la revendication 2, **caractérisée en ce qu'**un boîtier est prévu pour la réception de l'unité de détection et **en ce que** le boîtier présente des orifices de passage d'air, qui sont disposés en vis-à-vis de la cavité ou de l'évidement (5).

4. Unité de détection selon l'une ou plusieurs des revendications précédentes, **caractérisée en ce qu'**une capsule (7, 8, 9) sensible au climat de l'unité de détection (1) est prévue sur le côté opposé au capteur d'hygrométrie (3).
